# EUROPEAN PATENT SPECIFICATION

(11) **EP 3 691 962 B1**
(45) Date of publication and mention of the grant of the patent: **30.07.2025**
(21) Application number: 18785704.0
(22) Date of filing: 02.10.2018
(51) Int. Cl.: B62K 5/025, B62K 5/007, B62H 1/12

(54) **A VEHICLE**
EIN FAHRZEUG
UN VÉHICULE

(30) Priority: 02.10.2017 GB 201715993
(43) Date of publication of application: 12.08.2020
(73) Proprietor: Brown, Frederick, Charles, St Albans, Hertfordshire AL4 9LH (GB)
(72) Inventor: Brown, Frederick, Charles, St Albans, Hertfordshire AL4 9LH (GB)
(74) Representative: Dolleymores
(86) International application number: PCT/GB2018/052809
(87) International publication number: WO 2019/069068

(56) References cited:
- WO-A1-2010/110868
- WO-A2-2007/027502
- US-A- 4 280 246
- US-A1- 2006 283 674
- JKS: "JKS 1100 Front Adjustable Bump Stop Kit for Jeep JK/TJ/XJ/MJ/ZJ", 8 March 2015 (2015-03-08), XP002786765, Retrieved from the Internet <URL:https://web.archive.org/web/20150308154132/http://www.amazon.com:80/JKS-1100-Front-Adjustable-Bump/dp/B005TTZ5DY> [retrieved on 20181123]

## Description

The present invention relates to a vehicle and particularly, but not exclusively, to a mobility scooter.

Mobility scooters are an application to which the present invention is particularly applicable and thus the following description makes reference only to mobility scooters, but the invention may have applications to other types of three wheel vehicles with stabilisers which are encompassed within the scope of the claims.

Mobility scooters have been known for over thirty years, with the earlier scooters tending to be three wheel scooters and later scooters tending to be four wheel scooters.

The three wheel scooter and four wheel scooter each have their advantages and disadvantages, particularly when it comes to two major considerations which need to be taken into account when designing such a scooter. These are the posture of the user and the stability of the scooter.

Considering each in turn, posture is important because the person must be comfortable when seated. Generally three wheel scooters tend to be better for posture than four wheel scooters, for they permit a user to place their feet on either side of a single central front wheel. This tends to keep the user in a positive posture with their limbs outstretched in front of them. In contrast, with a four wheel scooter, the front wheels and any wheel guards, which must both accommodate the front wheels and the space swept by the front wheels when turning, together with the space occupied by the steering mechanism, normally means that the feet have to be placed behind the front wheel assembly, often in a space extending forward from immediately below a front edge of the seat, causing the user's posture to be "compressed". Furthermore, it is not desirable to raise the user so that they may position their feet above the front wheels, for this raises the centre of gravity tending to destabilise the scooter, for such scooters have a relatively narrow track width to enable them to pass easily through conventional doorways.

A second consideration when designing a scooter is the stability of the scooter. Four wheel scooters tend to be more stable than three wheel scooters, particularly during cornering, due to the provision of a wheel on each corner of the scooter. In contrast, three wheel scooters can tend to tip during cornering, due to having only a single front wheel. This can be particularly problematic, as a disabled or older person may not be able to put their foot down in time, or with sufficient strength to avoid an accident. Furthermore, they may not tend to shift their weight on the scooter, for example when cornering, as a more able bodied person may do, possibly subconsciously.

Despite the above, a three wheel scooter may have one advantage over a four wheel scooter when it comes to stability. This is because, where the user's feet are placed either side of a single central front wheel, typically twenty five percent of the body weight is over the front wheel. This helps to keep the centre of mass of the scooter forward, which in turn helps with the problem of tipping over backwards on a steep slope, or possibly when mounting a kerb. In contrast, with a four wheel scooter the user tends to have to sit fairly far back on the scooter, in order to be able to place their feet behind the front wheels, thus the centre of mass on a four wheel scooter tends to be significantly further towards the rear of the scooter than on a three wheel scooter and this can tend to cause the scooter to tip over on a steep slope or when mounting a kerb.

Examples of known scooters are described in patent applications bearing publication numbers WO 2007/027502 which discloses the features of the preamble of claim 1 and WO 2010/110868 A1.

It is an object of the present invention to provide an improved vehicle.

According to the present invention there is provided a vehicle as recited in claim 1.

The biasing means, adjustable to control the downward force applied by the biasing means on the central steered wheel, may be set to a exert a maximum force to maximise traction between the central steered wheel and the ground when the stabiliser wheels are also supporting the vehicle, but which force is not sufficient, for a given weight of rider, to lift the vehicle off the stop when the stabiliser wheels are not carrying any of the weight of the vehicle.

An advantage of the present invention is that it provides a vehicle having all the advantages that have been described above of a three wheel vehicle. However, a vehicle in accordance with the present invention, by having stabiliser wheels, avoids the stability issues that may otherwise arise.

The stabiliser wheels are not normally used as the main support for the vehicle, as they are only required to act as auxiliary wheels, which provide support (stability) to the vehicle only at those times when it is required, for example when the vehicle is no longer truly upright on the surface over which it is traveling, such as when cornering at speed.

As the stabiliser wheels are not the main wheels of the vehicle (unlike each of the four wheels of a traditional four wheel vehicle), they may be considerably smaller (possibly with solid tyres) than the central steering wheel, and they may be located fairly far forward on the vehicle (which further enhances stability). This may avoid the need for the stabiliser wheels to encroach into the foot space for the rider that is normally provided to either side of the central steered wheel on a three wheel vehicle. Thus the advantages are retained of the traditional three wheel vehicle over the four wheel vehicle, whist addressing the above mentioned stability issues of three wheel vehicles.

A particular advantage of the present invention is that when the vehicle is on a flat level surface, the suspension stop retains the front of the frame at a height above the surface such that there is a clearance between the stabiliser wheels and the surface. In this way the stabiliser wheels (which may be of a relatively small diameter and which may not have pneumatic tyres) will be prevented from creating unnecessary noise. Furthermore, because the vehicle will then be riding on the suspension stop, this clearance will not depend on the weight of the rider compressing the suspension biasing means, for the weight is transferred to the central steered wheel through the fixed suspension stop. Thus the clearance can be set irrespective of the rider weight.

In addition to the above mentioned advantages, the suspension mechanism of the vehicle of the present invention acts to keep a downward force on the central steered wheel even when, on uneven ground, the stabiliser wheels may otherwise act to lift the steered wheel off the ground, or reduce downward force on the central steered wheel to a point where reliable steerage may be lost. For example, with the present invention the centre steered wheel may be retained in contact with the ground even when the vehicle mounts a kerb at an oblique angle (normally necessary), permitting steerage to be retained at this critical moment in order to force the vehicle to continue its transverse across the kerb, being mounted.

Advantageously the vehicle comprises a steering mechanism that is connected to the central steered wheel but which is not connected to the stabiliser wheels, so that the direction of the stabiliser wheels is controlled only by their contact with the surface. This avoids the cost of providing extra linkages to the stabiliser wheels and avoids such linkages encroaching into the space that should otherwise be provided for the rider's feet. In addition, an advantage of a single steered wheel is retained, in that there are no tracking issues that might otherwise arise with multiple steered wheels. These tracking issues may result from damage occurring to the tracking mechanism due to one steered wheel encountering a hard "knock", for example when the vehicle ascends a kerb at an oblique angle, or they may be inherent, for example arising from the requirement to retain three steered wheels in alignment (in the case of a central steered main wheel and two stabiliser wheels) where two of those wheels (the stabiliser wheels) may not be at the same longitudinal position on the vehicle as the third (main) wheel, which may require multiple component linkages.

In addition to the above, the provision of a single steered wheel, which may be directly steered by a tiller or the like, without the requirement for an indirect track rod linkage, may permit the central steered wheel to be turned through almost 90 degrees, thus reducing the turning circle of the vehicle.

Preferably the stabiliser wheels are the wheels of respective castors, with each castor mounted to the frame so that it is generally free to rotate about a substantially vertical axis, the vehicle further comprising a stop associated with each castor to limit rotation of the castor relative to the frame so that each castor is prevented from turning outwardly from the straight ahead position.

Preventing the castors from turning outwardly avoids them rotating outwardly when coming into contact with a kerb at an oblique angle. This is important, because it permits the stabiliser wheel of the castor to be squashed against and to subsequently rise up the kerb. In contrast, if the caster could turn outwardly, then on contacting the kerb the leading edge of the stabiliser wheel of the castor will tend to bite into the kerb and turn into the kerb, thus pushing the vehicle away from the kerb, the leverage of the castor against the fixed kerb being greater than the frictional forces between the steered wheel and the ground. This action tends to become reciprocating, with the castor repeatedly pushing the front end of the vehicle away from the kerb, until eventually a rear wheel of the mobility scoter will also end up against the kerb with the vehicle aligned with the kerb, from where it will normally be impossible to mount the kerb.

Preventing the castors from turning outward does not otherwise impede manoeuvrability to any significant extent, for most of the time the castors will not be in contact with the ground and when they are, the vehicle is likely to be travelling generally straight ahead. The main exception to this will be when cornering, when the stabiliser on the outside of the turn will likely come into contact with the ground to stabilise the vehicle through the turn. However, this castor will need to turn inward to follow the turn, which it is free to do, while the inner castor, which would need to turn outward to follow the turn, will tend to be raised clear of the ground. In any other situation, the far superior grip of the normally larger diameter central steered wheel, with greater downward force on it, will control the direction of travel, with the smaller stabiliser wheel (normally with a solid tyre) being forced to scrub sideways, but this is only likely to occasionally occur.

Each castor may preferably rotate through at least 180 degrees relative to the frame. In this manner the castors will simply rotate through 180 degrees, if they are in contact with the ground, and the vehicle changes from a forward to reverse direction, thus permitting the stabiliser wheels to remain aligned with the direction of travel.

Each castor may have an associated castor biasing means, arranged to urge that castor to the straight ahead position, such that when a castor is no longer in contact with the surface it will assume the straight ahead position so it is correctly aligned for subsequent contact.

The suspension stop may comprise an adjustment means to permit the clearance to be adjusted. This may then be set to take into account such things as the unevenness of the surface the vehicle is most likely to be used on (if it is totally flat very little clearance will be required), to compensate for a soft tyre on the central steered wheel, or to take into account the assurance a rider may desire. A nervous rider may desire a minimum clearance to provide a maximum feeling of stability, in preference to a quite ride, (which may then be sacrificed because one or more of the stabiliser wheels will then be more likely to be in contact with the ground).

It is preferable that the clearance is either fixed at more than 10mm or that, if it is adjustable, it may be set to more than 10 mm and more preferably more then 14mm.

The axis of rotation of each stabiliser wheel may be located forward of the axis of rotation of the central steered wheel. This leaves a larger unimpeded space for the rider's feet and also provides greater stability. In addition the diameter of each stabiliser wheel may be less than two thirds of the diameter of the central steered wheel, reducing the overall bulk of the vehicle and again leaving a larger unimpeded space for the rider's feet.

The biasing means for the central steered wheel may comprise a spring. Such a spring may also define the suspension stop when it is fully compressed, avoiding the need for a separate stop.

Alternatively, the stop may be resilient and permit further downward travel of the frame relative to the steered wheel in order to absorb, or partly absorb, any shock resulting from the steered while striking an obstacle while the frame is supported on the stop. Thus when the frame is riding on the stop, there is still some shock absorption between the steered wheel and the frame.

Preferable the stop is compressible by an amount which is insufficient for the said further downward travel to exceed the said height above the surface. In this manner, on normal impact of an obstacle by the steered wheel on an otherwise flat surface, the compression experienced by the stop will be insufficient to allow the stabiliser wheels to come into contact with the ground. The stiffness of the stop being greater than the stiffness of the biasing means.

The stop may comprises a block of compressible material and, preferably, the biasing means for the steered wheel comprises a compression spring acting between the frame and the steered wheel, the compression spring having a longitudinal axis and being connected at one end, directly or indirectly, by the resilient block of material to one of either the frame or the steered wheel, the block of material having a stiffness in the axial direction greater than that of the compression spring when the compression spring in a state other than a fully compressed state, the stop being formed by the resilient block and the compression spring when the compression spring is in a fully compressed state.

Advantageously the vehicle may further comprising a ride height adjuster for controlling said height above the surface by limiting the maximum expansion of the compressible material.

Two embodiments of the present invention will now be described, by way of example only, with reference to the mobility scooters illustrated in the accompanying figures of which:
Figure 1 is a right hand side elevation of a first embodiment of a mobility scooter in accordance with the present invention;
Figure 2 is a plan view of the mobility scooter of Figure 1;
Figure 3 is a front elevation of the mobility scooter of Figures 1 and 2;
Figure 4 is a front elevation of the front of the frame of the mobility scooter of Figures 1 to 2 and the various main components associated with the frame;
Figure 5 is a side elevation of the frame and components of Figure 4 with a central steered wheel shown in an upper position;
Figure 6 corresponds to Figure 5, but with the central steered wheel shown in a lower position;
Figure 7 is a front elevation of the one of the castors of Figures 1 to 4;
Figure 8 is a side elevation of the castor of Figure 7;
Figure 9 is a plan view of the castor of Figures 7 and 8 travelling in a first direction;
Figure 10 corresponds to Figure 9, but shows the castor travelling in the opposite direction to that shown in Figure 9;
Figures 11 to 13 schematically illustrate the position of the central steering wheel and castors during different manoeuvres of the mobility scooter of Figures 1 to 4.
Figure 14 is a schematic right hand side elevation of a second embodiment of a mobility scooter in accordance with the present invention, which is similar to that shown in Figure 1, showing the mobility scooter on level ground;
Figure 15 corresponds to figure 14, but shows the mobility scooter encountering a number of raised obstacles; and
Figure 16 corresponds to Figure 14 and 15, but shows the mobility scooter travelling over uneven ground.

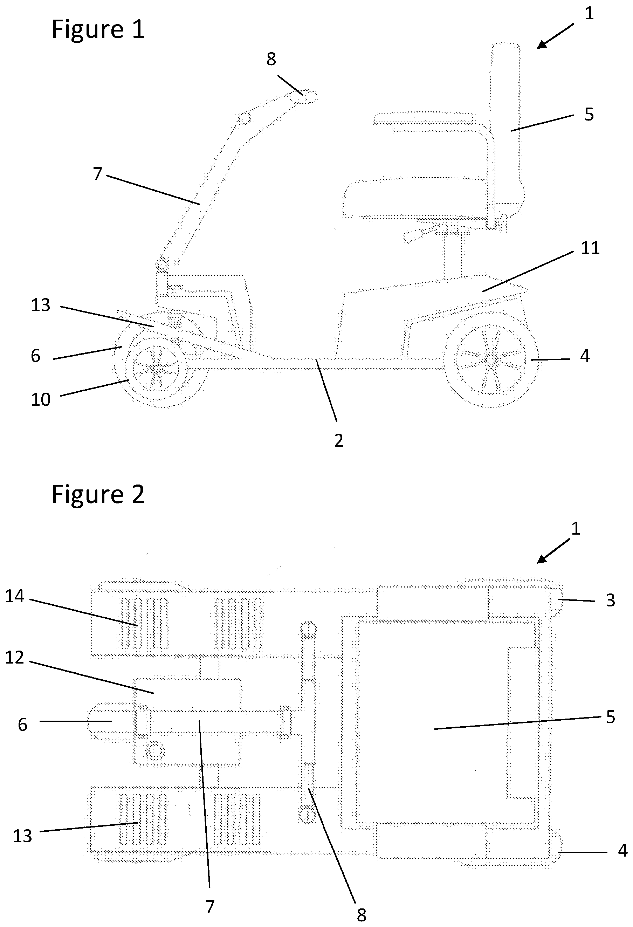

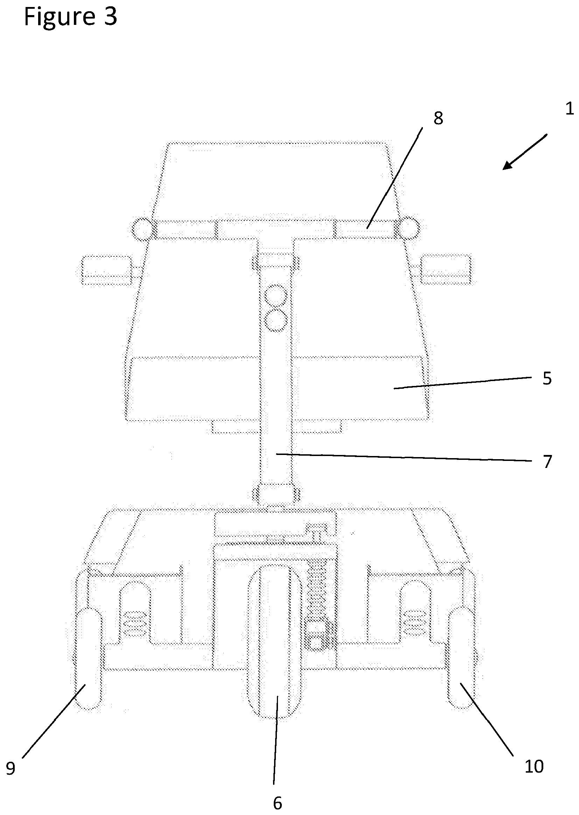

Referring to Figures 1 to 3 a mobility scooter, indicated generally as 1, is shown as it would be if a rider were present, although the rider is not shown. The mobility scooter 1 comprises a frame 2, a pair of rear wheels 3 and 4 attached to the frame 2, a seat 5 attached to the frame 2, a central steered front wheel 6, a tiller 7, handlebars 8 for steering the central wheel 6 and left and right stabiliser wheels 9 and 10 mounted at the front of the frame 2.

The mobility scooter 1 of Figures 1 to 3 also has covers 11 and 12, cover 11 concealing the electric motor battery and various other components found on a mobility scooter, with cover 12 covering some components of the steering mechanism and providing a mud guard for the central wheel 6. As can be most clearly from Figure 2 the scooter also has two fixed foot rests 13 and 14 provided to either side of the front wheel 6, which extend over the stabiliser wheels 9 and 10.

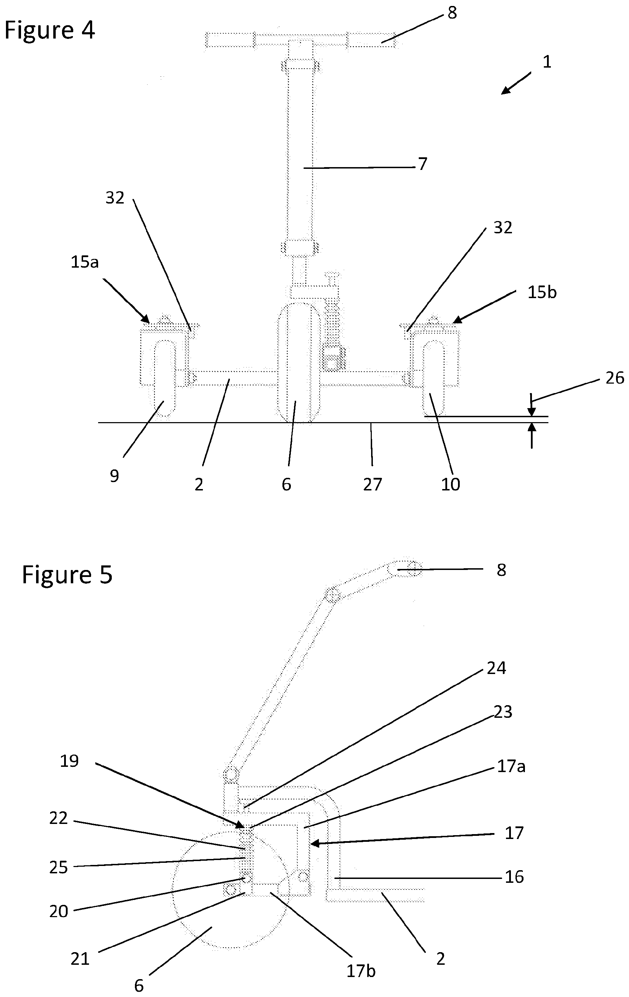

Referring now to Figures 4, 5 and 6, these shows the front portion of the frame 2 and the various components that are attached to the front portion of the frame, excluding the cover 12 and foot rests 13 and 14, omitted for clarity.

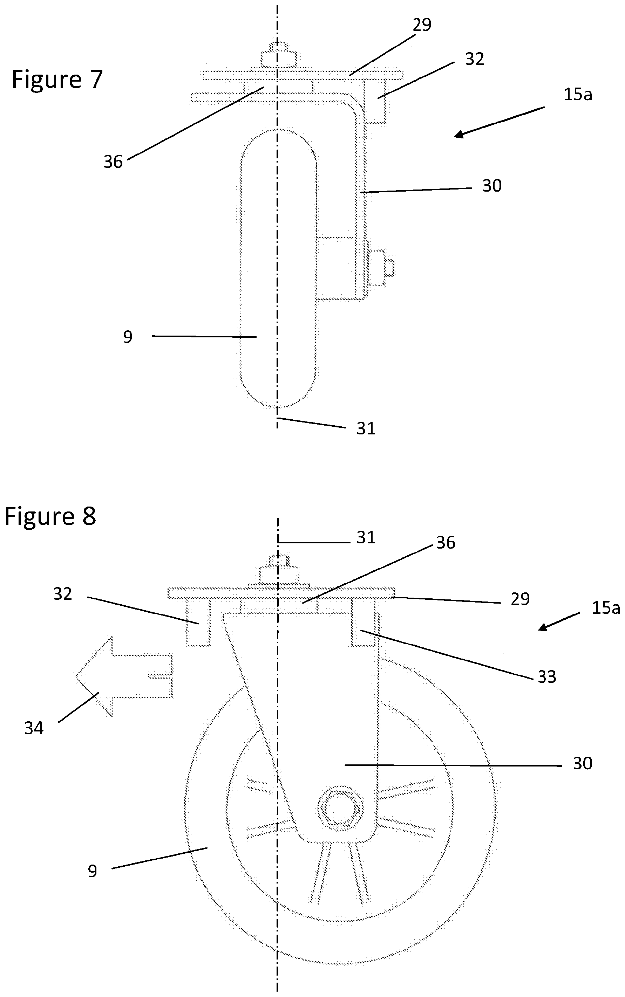

With reference to Figure 4, this shows each of the stabiliser wheels 9 and 10 forming part of respective castor 15a and 15b, which are attached to a front portion of the frame 2. The castors 15a and 15b are described in greater detail below with reference to Figures 7 to 13.

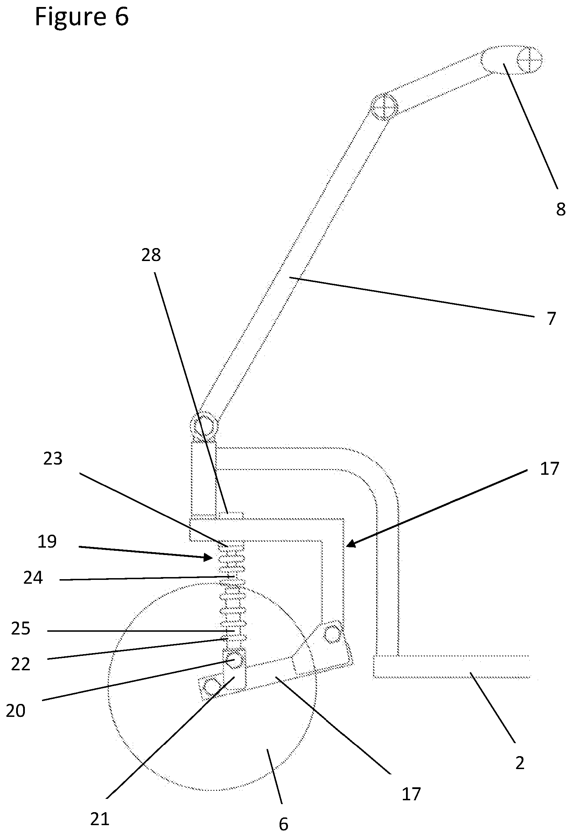

Referring to Figures 4 and 5, these show how the front central steered wheel 6 may be steered by the handlebars 8 via tiller 7 and that the central steerable wheel 6 is supported from a front extension portion 16, of the frame 2, via steerable subframe 17. The steerable subframe 17 comprises an upper component 17a rotatable with the tiller 7, relative to the front extension portion 16 of frame 2, and a lower component 17b pivotally connected to the upper component 17a via pin 18, to permit the central wheel 6 to move from an upper position shown in Figure 5 to a lower position shown in Figure 6.

A suspension unit, indicated generally as 19, is pivotally connected by pin 20 to a bracket 21 of the lower component 17b of the steerable subframe 17. The suspension unit comprises a spring 22 acting between the bracket 21 and a plate 23, which sits under the upper component 17a of the moveable frame 17, as shown.

The spring 23 is retained in position by a shaft 24 passing through its centre and which is anchored at its lower end to the pin 20. Coaxially located internally of the spring, but external of the shaft 24 is a cylindrical tube 25 which is free to slide on the shaft 24.

Figures 1 to 5, show the central steered front wheel 6 in the vertical position that it will adopt under the weight of the mobility scooter with a rider thereon. With reference to Figure 5, when the central wheel 6 is in the position shown, the cylindrical tube 25 extends between the top of the bracket 21 and the plate 23 and thus acts a stop, preventing the central wheel 26 moving upwards against the action of the spring 25 towards the upper component 17a of the steerable subframe 17. Thus, the cylindrical tube 25 retains the steerable wheel 6 in the position shown in Figures 1 to 5, regardless of the weight of the rider and any upward forces placed on the wheel during operation of the mobility scooter 1. The cylindrical tube 25 is of such a length that, as can be most clearly seen from Figure 4, it maintains the central wheel 6 in a position such that, when a tire on the central wheel 6 is correctly inflated, there is a clearance 26 of 14mm between the bottom of the stabiliser wheels 9 and 10 and the ground 27.

On level ground, with a rider on board, the suspension unit 19 adopts the position shown in Figures 4 and 5, such that the stabiliser wheels 9 and 10 only come into contact with the ground should the mobility scooter 1 start to lean excessively, for example on cornering or on the shifting of the weight from side to side of the rider both during use and when getting on and off the mobility scooter 1.

As will be appreciated from Figure 4, if one the stabiliser wheels 9 or 10 were to mount a kerb for example, or the central steered wheel 6 were to pass over a trough more than 14mm deep, then without any vertical movement of the central wheel 6 relative to the frame 2, the central steered front wheel 6 would be lifted clear of the ground 27 so that the steerage would be lost, or the pressure exerted on the ground by the central steerable front wheel 6 would be so reduced that it would no longer be sufficient to steer the mobility scooter 1. This is avoided with the mobility scooter in accordance with the present invention, for as shown in Figure 6, in a situation where the frame 2 becomes supported by the stabiliser wheels 9 and 10, the spring 22 forces the central steered wheel 6 downwards, as shown, to keep it firmly in contact with the ground 27, until eventually it reaches such a position where plate 28, mounted to the top of the shaft 24, comes into contact with a top surface of the upper component 17a of steerable subframe 17 to retain the shaft 24 in the upper component 17a of the steerable subframe 17. This vertical travel of the central steered front wheel 6 acts to keep the central steered front wheel 6 in contact with the ground, even when the ground is uneven and the stabiliser wheels 9 and 10 are in contact with the ground and partly supporting the mobility scooter 1, thus maintaining steerage for the mobility scooter 1.

Although not shown, adjustment means may be included in the suspension unit 19 in order to adjust the position of the suspension stop formed by the top of the cylindrical tube 25, in order to adjust the clearance 26 shown in Figure 4. This may be used to compensate for the type of ground the mobility scooter will typically be used on, by setting a greater clearance 26 for rough ground, to compensate for any unexpected softness in the front tire of the central steered wheel 6, or tailor the characteristics of the mobility scooter 1 to the rider, by setting the stabiliser wheels 9 and 10 close to the ground in the case of a more nervous or new rider in order to enhance the feeling of stability of the mobility scooter 1. Similarly, also not shown, the spring 22 is adjustable to control the downward force applied by the biasing means on the central steered wheel. In this manner the spring 22 may be set to a exert a maximum force to maximise traction between the central steered wheel 6 and the ground 27 when the stabiliser wheels 9, 10 are also supporting the scooter 1, but which force is not sufficient, for a given weight of rider, to lift the scooter 1 off the stop formed by the plate 23 and cylindrical tube 25 when the stabiliser wheels 9, 10 are not carrying any of the weight of the scooter 1. Adjustable springs of this type are readily available and are commonly found on some older models of motor bikes.

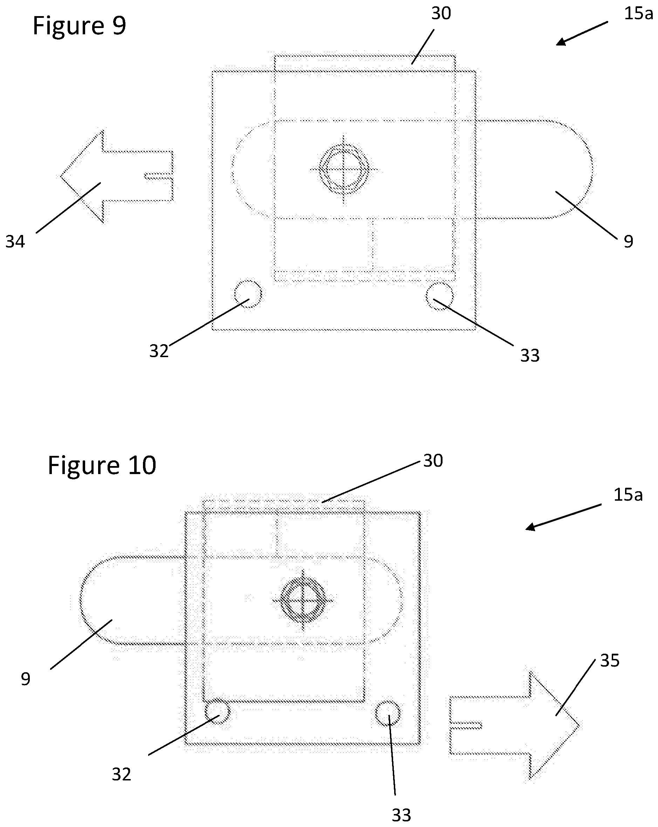

Referring now to Figure 7 and 8, here stabiliser wheel 9 is shown to a larger scale, where it is seen that the wheel 9 forms part of the castor 15a of Figure 4. The castor 15a comprises a top plate 29 welded to the frame 2 (not seen in Figures 8 and 9) and a wheel support bracket 30 pivotally connecting the stabiliser wheel 9 to the fixed top plate 29 so that it may rotate about a vertical pivot axis 31. As can be seen from Figure 8, the rotation axis of the stabiliser wheel 9 is a set back from the vertical pivot axis 31 of the castor 15a, so that when the castor 15a moves forward in the direction of the arrow 34 it will adopt the position shown in side elevation in Figure 8, (and as also shown in the plan view of Figure 9). A small spring (not shown) in a bush 36 between the top plate 29 and the support bracket 30 also acts to bias the stabiliser wheel 9 to the position shown, so that when the stabiliser wheel is clear of the ground it will be retained in this position ready for it returns into contact with the ground.

With further reference to Figures 7 and 8, two wheel support bracket stops 32 and 33 extend downwardly from the fixed top plate 29 and limit rotation of the castor about the vertical pivot axis 31. As can be seen most clearly in Figure 9, when travelling in a forward direction, as represented by arrow 34, the stop 33 prevents the stabiliser wheel 9 turning outwards, whilst permitting it to turn inwards and to rotate 180° to the position shown in Figure 10. This position would be adopted by the wheel when in contact with the ground and the mobility scooter 1 was reversed such that the stabiliser wheel 9 moved in the direction of arrow 35 of Figure 10. However, in this "reverse" position the wheel 9 is prevented from turning outwards again, while reversing in the direction of arrow 35, by stop 32. The stops 32 and 33 thus prevent the stabiliser wheel 9 turning outwards if it should come into contact with a fixed object such as a kerb. In such a situation the stops 32 or 33 would retain the stabiliser wheel 9 in a forward facing direction, or let it be deflected inwards until it was aligned with the kerb. However the stops 32, 33 prevent the stabiliser wheel 9 snatching on the kerb and turning sharply into the kerb, which would deflect the front of the mobility scooter 1 away from the kerb and prevent it from climbing the kerb.

The castor 15b of Figure 4 is an exact mirror image of the castor 15a described above and functions in an identical manner.

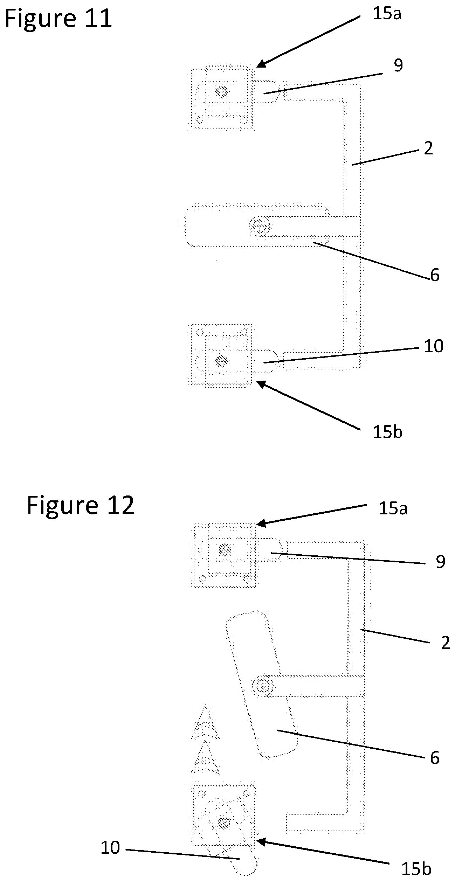

With reference to Figure 11, this is schematic in nature and for clarity only shows the frame 2 stopping short of the respective top plates 29. However the top plates 29 are each welded to the frame 2. Similarly, for simplicity, the centre steered wheel 6 is shown directly pivoted on the frame 2.

Figure 11 illustrates the position adopted by the castors 15a, 15b when they are either clear of the ground (regardless of the direction of travel of the mobility scooter 1) or when they are in contact with the ground and moving straight ahead.

Figure 12 corresponds to Figure 11, but shows the position the castors 15a, 15b adopt during a sharp right turn that places the left hand castor 15 in contact with the ground.

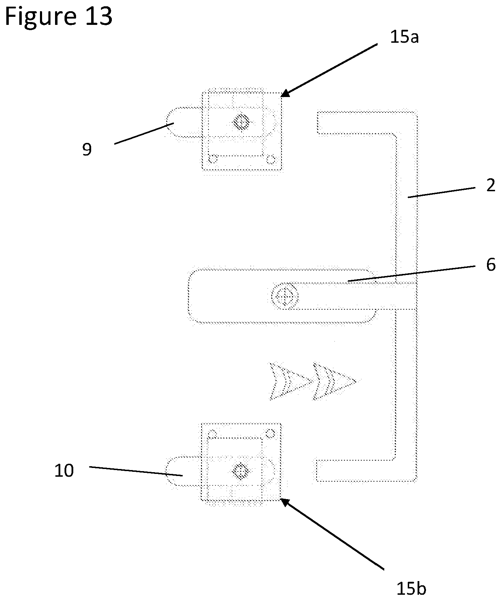

Figure 13 shows the position of the castor 15a, 15b would adopt when the mobility scooter 1 is being reversed.

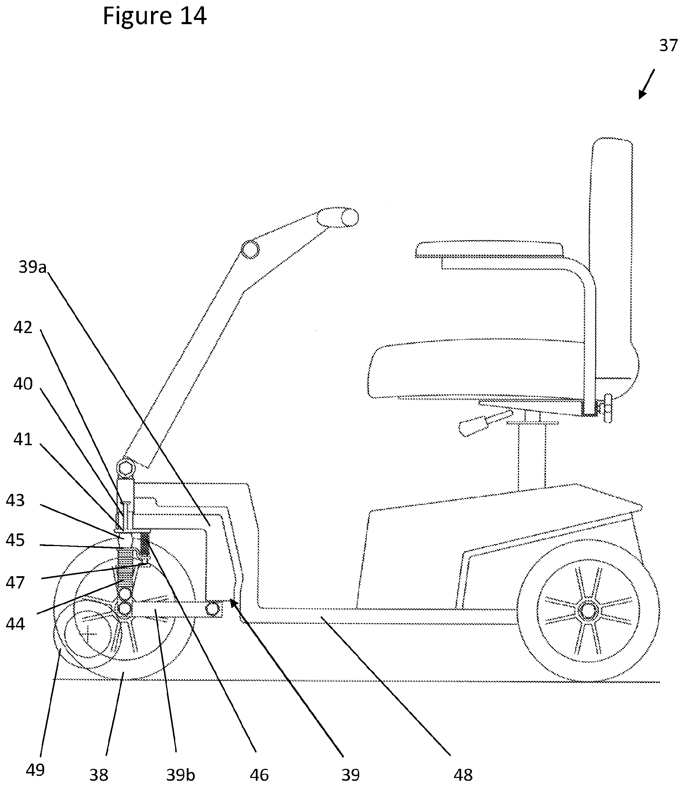

Referring now to Figures 14 to 16, these schematically illustrate a mobility scooter, indicated generally as 37. This is very similar to the mobility scooter 1 previously described with reference to Figures 1 to 13, with only the steered wheel 38 and immediate related components differing to those shown in, (and described with reference to), the previous figures. Thus only these related components are described again here. Additionally, for reasons of clarity, in Figures 14 to 16 the foot rest, stabiliser wheels and those sections of the frame which retain the stabiliser wheels in place have been omitted, these being the same as those of the mobility scooter 1 of Figures 1 to 13.

Referring now to Figure 14, as with the previous embodiment, the steerable wheel 38 is mounted to a steerable subframe, indicated generally as 39, this comprises a lower component 39b pivotally mounted to an upper component 39a, the pivotable lower component 39b retaining the steerable wheel 38 in position within the steerable subframe 39, whilst permitting the steerable wheel 38 to move up and down relative to the steerable subframe 39.

A shaft 40 extends through a hole in a mounting plate 41 of the steerable subframe 39 and connects to a distal end of the lower component 39b of the steerable subframe 39. The top of the mounting plate 41 has a flange 42, to limit downward travel of the shaft 40 through the mounting plate 41.

Positioned on the shaft 40, below the mounting plate 41, is a compressible rubber bush 43 and a compression spring 44. Additionally, between the rubber bush 43 and the compression spring 44, there is located an adjustment plate 45. This is retained in the substantially horizontal position as shown, by being mounted on the shaft 40 at its distal end by means of a collar (not shown) fixed in an aperture (not shown) in the proximal end of the adjustment plate 45. The collar has an inner diameter just slightly larger than the outer diameter of the shaft 40, thus enabling the adjustment plate 45 to slide and up and down the shaft 40, whilst retaining the adjustment plate in the horizontal position shown. Thus, the rubber bush 43 is sandwiched between the mounting plate 41 and the adjustment plate 45.

Also sandwiched between the mounting plate 41 and the adjustment plate 45 is an adjustment spring 46, which is also a compression spring. This has a threaded shaft 47 passing through it and retaining it in place. The threaded shaft 47 can be adjusted to alter the length of the adjustment spring 46.

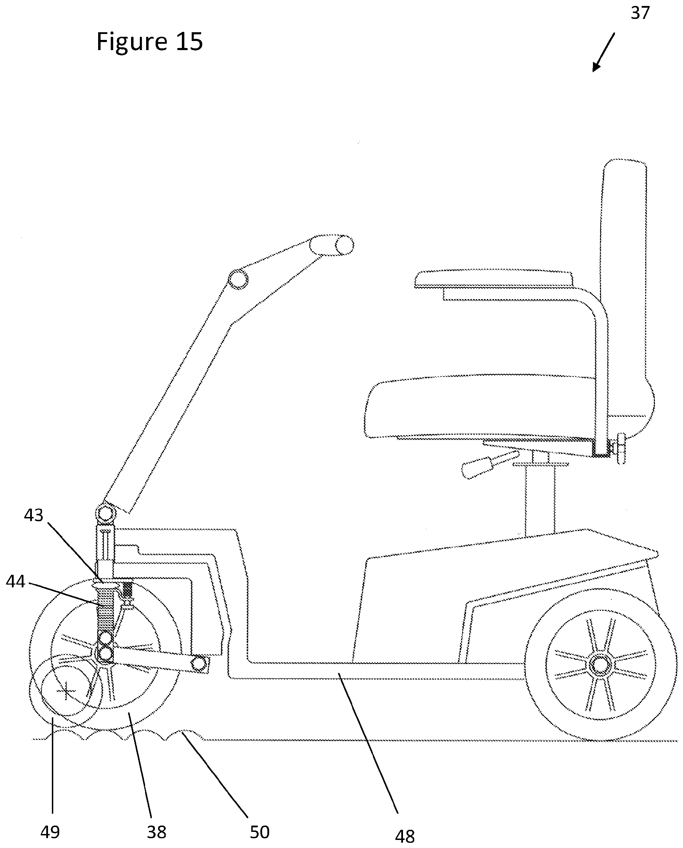

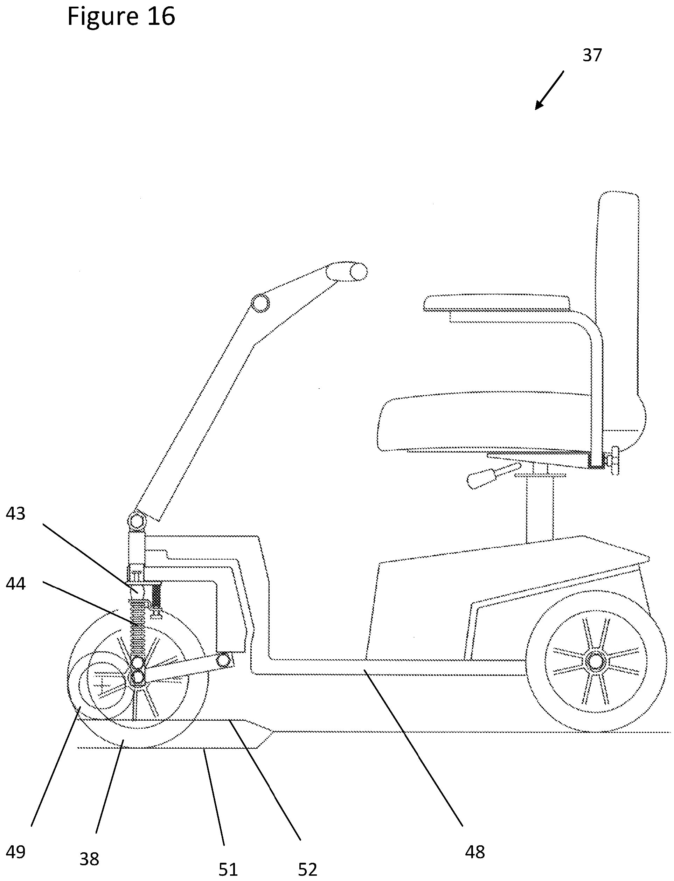

Although in Figure 14 (and subsequent Figures 15 and 16), the rider has been omitted, the components are shown in the position they would adopt with the weight of a rider present.

As with the previous embodiment illustrated and described with reference to Figures 1 to 13, when the mobility scooter 37 of Figures 14 to 16 is on a flat level surface, as shown in Figure 14, it is desirable that the steerable wheel 38 is located vertically relative to the front of the frame 48 of the mobility scooter 37, at a position such that stabiliser wheels 49 have a clearance above the ground of about 15mm, with the compression spring 44 fully compressed by the weight of the rider and the scooter. Thus when riding over flat or gently undulating ground, the compression spring 44 maintains a constant (fully compressed) length and thus acts to maintain the stabiliser wheels 15mm above the surface of the ground. However, where the ground undulates greatly and where the steerable wheel 38 should then run on a surface lower than the surface on which the two stabiliser wheels 49 are running, the compression spring 44 will then expand to maintain downward pressure on the steerable wheel 38 as it falls away from the frame 48, when the front of the frame 48 is supported by the stabiliser wheels 49. The compression spring 44, urging the steerable wheel 38 downwards into firm contact with the ground, thus ensures the steerable wheel 38 is still able to steer the scooter 37.

However, when the compression spring 44 is fully compressed, as for example when travelling over fairly level ground, it may be desirable that some limited vertical travel of the steerable wheel 38 relative to the front of the frame 48 to be possible, in order to absorb shocks that may be otherwise transmitted to the frame 48 by the steerable wheel 38 encountering an obstacle, or running over a rough surface. This is addressed by the embodiment shown in Figure 14 by the rubber bush 43, which is arranged to absorb such shocks whilst supporting the frame 48.

Although it may be desirable to employ the rubber bush 43 to absorb shocks, it is also necessary to maintain the clearance between the ground and the stabiliser wheels 49. As previously described, the compression spring 44 may be arranged to be fully compressed by riders of a certain weight range that the mobility scooter 37 is designed to carry, or is set up to carry. However it is not possible to similarly fully compress the rubber bush 43, or its ability to absorb shocks will be lost.

It is possible, to select and fit a rubber bush of the correct dimensions and stiffness for a given weight of rider, in order to retain the desired clearance between the stabiliser wheels 49 and the ground. However it is desirable that that the weight range of riders the scooter is designed to carry be relatively large, without the need to change components of the scooter 37.

Some riders may thus be significantly heavier than others and although all of these may fully compress the compression spring 44 they will compress the rubber bush 43 by different amount depending on the weight of rider. The rubber bush 43 needs to have a vertical stiffness greater than that of the compression spring 44, to ensure that the compression spring 44 is fully compressed prior to the rubber bush being compressed by any significant amount. The rubber bush 43 could have a stiffness that would retain stabiliser wheels 49 at a desired height above the ground, for the heaviest of intended riders, but this would then provide little in the way of shock absorption for a lighter rider. In order to address this, the adjustment spring 46 is located effectively in parallel with the rubber bush 43 and it is the combined stiffness of the rubber bush 43 and the adjustment spring 46 which determines the separation between the mounting plate 41 and the adjustment plate 45 and thus the clearance of the stabiliser wheels 49. The threaded shaft 47 permits the compression of the adjustment spring 46 to be adjusted and thus this can be adjusted for a rider of a particular weight, so as to trim the stiffness of the combined rubber bush 43 and adjustment spring 46, in order to provide the desired clearance for the stabiliser wheels 49 for a rider of any selected weight within a permissible range, as shown in Figure 14.

Referring now to Figure 15, this shows how the rubber bush 43 will be compressed as a result of the steerable wheel 38 encountering an obstacle 50, acting to absorb the impact while the compression spring 44 acts to maintain the front of the frame 48 at a set level above the ground, thus retaining a clearance between the stabiliser wheels 49 and the ground. However, as with the embodiment previously described with reference to Figures 1 to 13, should the ground 51 below the steerable wheel 38 be lower than the ground 52 below the stabiliser wheels 49, as shown in Figure 16, then the compression spring 44 will expand, as shown in Figure 16, to retain a load on the steerable wheel 38 and thus maintain the steering of the mobility scooter 37.

Two embodiments of the present invention have been described above, by way of example only, with reference to the accompanying drawings and it will be appreciated that many modifications will be possible which fall within the scope of the appended claims. Particularly with reference to Figures 14 to 16 it should be noted that this arrangement need not employ the adjustment plate 45, adjustment spring 46 and threaded shaft 47.

## Claims

1. A vehicle (1) comprising:
a frame (2);
two wheels (3, 4) mounted at or towards a rear end of the frame;
a steered wheel (6) centrally mounted at or towards a front end of the frame;
two stabiliser wheels (9, 10) mounted at or towards the front end of the frame to respective sides of the steered wheel (6); and
a suspension mechanism (19) between the frame (2) and the steered wheel (6) to permit vertical travel of the steered wheel (6) relative to the frame (2), the suspension mechanism (19) comprising biasing means (22) for the steered wheel (6), the biasing means (22) acting directly or indirectly between the frame (2) and the steered wheel (6) to urge the steered wheel downwards relative to the frame (2), wherein the biasing means (19) is arranged and selected such that in use, when the vehicle (1) is on an uneven surface, where the stabiliser wheels (9, 10) come into contact with the ground so that the frame (2) is supported at least partially by the stabiliser wheels (9, 10), the biasing means (22) urges the steered wheel (6) downwards into contact with the surface to act to maintain the steered wheel (6) in contact with the surface, to retain steerage as the vehicle (1) becomes partially supported by the stabiliser wheels (9, 10),
the vehicle (1) being **characterised in that** the suspension mechanism (19) further comprises a suspension stop (25) arranged to limit upward travel of the steered wheel (6) against the biasing means (22) relative to the frame (2), wherein the biasing means (22) is arranged to be adjusted for the weight of a given rider to control the downward force applied by the biasing means (22) on the steered wheel (6) such that in normal use, when the vehicle (1) is on a flat level surface, the weight of the vehicle and weight of a rider urge the frame (2) downwards relative to the steered wheel (6), against the biasing means (22), until the suspension stop (24) limits further downward travel of the frame (2) relative to the steered wheel (6), where the front of the frame (2) is then supported by the steered wheel (6) and the suspension stop (24), with the suspension stop (24) retaining the front of the frame (2) at a height above the surface such that there is a clearance between the stabiliser wheels (9, 10) and the flat level surface.

2. A vehicle (1) as claimed in claim 1 further comprising a steering mechanism (7, 8) connected to the steered wheel (6) but which is not connected to the stabiliser wheels (9, 10), so that the direction of the stabiliser wheels (9, 10) is controlled only by their contact with the surface.

3. A vehicle (1) as claimed in claim 1 or 2 wherein the stabiliser wheels (9, 10) are the wheels of respective castors (15a, 15b), wherein each castor (15a, 15b) is mounted to the frame (2) so that it is generally free to rotate about a substantially vertical axis, the vehicle (1) further comprising a stop (32) associated with each castor (15a, 15b) to limit rotation of the castor (15a, 15b) relative to the frame (2), so that from the straight ahead position each castor (15a, 15b) would assume if it should come in to contact with the surface as the vehicle (1) is moving forward in a straight line, each castor (15a, 15b) is prevented from turning outwardly from the straight ahead position.

4. A vehicle (1) as claimed in claim 3 wherein each castor (15a, 15b) has an associated castor biasing means to urge that castor (15a, 15b) to the straight ahead position, such that when a castor (15a, 15b) is no longer in contact with the surface it will assume the straight ahead position.

5. A vehicle (1) as claimed in any preceding claim wherein the axis of rotation of each stabiliser wheel (9, 10) is located forward of the axis of rotation of the steered wheel (6).

6. A vehicle (1) as claimed in any preceding claim wherein the diameter of each stabiliser wheel (9, 10) is less than two thirds of the diameter of the steered wheel (6).

7. A vehicle (1) as claimed in any preceding claim wherein the suspension stop (24) comprises an adjustment means to permit the clearance to be adjusted.

8. A vehicle (1) as claimed in any preceding claim wherein the biasing means for the steered wheel (6) comprises a spring (22) which also defines the suspension stop when it is fully compressed.

9. A vehicle (37) as claimed in any one of claims 5 to 7 wherein the suspension stop (43) is resilient and permits further downward travel of the frame (48) relative to the steered wheel (38) in order to absorb, or partly absorb, any shock resulting from the steered wheel (38) striking an obstacle while the frame (48) is supported on the stop (43).

10. A vehicle (37) as claimed in claim 9 wherein the stiffness of the suspension stop (43) is greater than the stiffness of the biasing means (44), and the suspension stop (43) is compressible by an amount which is insufficient for the said further downward travel to exceed the said height above the surface.

11. A vehicle (37) as claimed in any one of claims 9 or 10 wherein the suspension stop (43) comprises a block of compressible material and wherein the biasing means (44) for the steered wheel (38) comprises a compression spring (44) acting between the frame (48) and the steered wheel (38), the compression spring (44) having a longitudinal axis and being connected at one end, directly or indirectly, by a resilient block of material (43) to one of either the frame (48) or the steered wheel (38), the block of material (43) having a stiffness in the axial direction greater than that of the compression spring (44) when the compression spring (44) is in a state other than a fully compressed state, the suspension stop being formed by the resilient block (43) and the compression spring (44) when the compression spring (44) is in a fully compressed state.

12. A vehicle (37) as claimed in claim 11 further comprising a ride height adjuster (45, 46, 47) for controlling the maximum height of the stabiliser wheels (49) above the flat level surface by limiting the maximum expansion of the compressible material (43).

13. A vehicle (1) as claimed in any preceding claim which is a mobility scooter.

## Patentansprüche

1. Fahrzeug (1), das Folgendes umfasst:
einen Rahmen (2);
zwei Räder (3, 4), die an oder in Richtung eines hinteren Endes des Rahmens angebracht sind;
ein gelenktes Rad (6), das mittig an oder in Richtung eines vorderen Endes des Rahmens angebracht ist;
zwei Stabilisierungsräder (9, 10), die am vorderen Ende des Rahmens oder in Richtung desselben an den jeweiligen Seiten des gelenkten Rads (6) angebracht sind; und
einen Aufhängungsmechanismus (19) zwischen dem Rahmen (2) und dem gelenkten Rad (6), um eine vertikale Bewegung des gelenkten Rads (6) relativ zum Rahmen (2) zu ermöglichen, wobei der Aufhängungsmechanismus (19) ein Vorspannmittel (22) für das gelenkte Rad (6) umfasst, wobei das Vorspannmittel (22) direkt oder indirekt zwischen dem Rahmen (2) und dem gelenkten Rad (6) wirkt, um das gelenkte Rad relativ zum Rahmen (2) nach unten zu drücken, wobei das Vorspannmittel (19) so ausgelegt und ausgewählt ist, dass im Gebrauch, wenn sich das Fahrzeug (1) auf einer unebenen Oberfläche befindet, auf der die Stabilisierungsräder (9, 10) mit dem Boden in Kontakt kommen, so dass der Rahmen (2) mindestens teilweise von den Stabilisierungsrädern (9, 10) getragen wird, das Vorspannmittel (22) das gelenkte Rad (6) nach unten in Kontakt mit der Oberfläche drückt, um das gelenkte Rad (6) in Kontakt mit der Oberfläche zu halten, um die Lenkfähigkeit aufrechtzuerhalten, wenn das Fahrzeug (1) teilweise von den Stabilisierungsrädern (9, 10) gestützt wird,
wobei das Fahrzeug (1) **dadurch gekennzeichnet ist, dass** der Aufhängungsmechanismus (19) ferner einen Aufhängungsanschlag (25) umfasst, der so ausgelegt ist, dass er den Aufwärtsweg des gelenkten Rads (6) gegen das Vorspannmittel (22) relativ zum Rahmen (2) begrenzt, wobei das Vorspannmittel (22) so ausgelegt ist, dass es für das Gewicht eines bestimmten Fahrers eingestellt werden kann, um die von dem Vorspannmittel (22) auf das gelenkte Rad (6) ausgeübte Abwärtskraft so zu steuern, dass bei normalem Gebrauch, wenn sich das Fahrzeug (1) auf einer ebenen Oberfläche befindet, das Gewicht des Fahrzeugs und das Gewicht eines Fahrers den Rahmen (2) relativ zum gelenkten Rad (6) gegen das Vorspannmittel (22) nach unten drücken, bis der Aufhängungsanschlag (24) die weitere Abwärtsbewegung des Rahmens (2) relativ zum gelenkten Rad (6) begrenzt, wobei die Vorderseite des Rahmens (2) dann vom gelenkten Rad (6) und dem Aufhängungsanschlag (24) abgestützt wird, wobei der Aufhängungsanschlag (24) die Vorderseite des Rahmens (2) in einer Höhe über der Oberfläche hält, so dass zwischen den Stabilisierungsrädern (9, 10) und der ebenen Oberfläche ein Freiraum vorhanden ist.

2. Fahrzeug (1) nach Anspruch 1, das ferner einen Lenkmechanismus (7, 8) umfasst, der mit dem gelenkten Rad (6) verbunden ist, jedoch nicht mit den Stabilisierungsrädern (9, 10) verbunden ist, so dass die Richtung der Stabilisierungsräder (9, 10) nur durch ihren Kontakt mit der Oberfläche gesteuert wird.

3. Fahrzeug (1) nach Anspruch 1 oder 2, wobei die Stabilisierungsräder (9, 10) die Räder der jeweiligen Rollen (15a, 15b) sind, wobei jede Rolle (15a, 15b) so am Rahmen (2) angebracht ist, dass sie im Wesentlichen frei um eine im Wesentlichen vertikale Achse drehbar ist, wobei das Fahrzeug (1) ferner einen Anschlag (32) umfasst, der jeder Rolle (15a, 15b) zugeordnet ist, um die Drehung des gelenkten Rads (15a, 15b) relativ zum Rahmen (2) zu begrenzen, so dass aus der Geradeausposition, die jede Rolle (15a, 15b) einnehmen würde, wenn sie bei Vorwärtsbewegung des Fahrzeugs (1) in einer geraden Linie mit der Oberfläche in Kontakt käme, jede Rolle (15a, 15b) daran gehindert wird, sich aus der Geradeausposition nach außen zu drehen.

4. Fahrzeug (1) nach Anspruch 3, wobei jede Rolle (15a, 15b) ein zugeordnetes Rollenvorspannmittel aufweist, um die Rolle (15a, 15b) in die Geradeausposition zu drücken, so dass, wenn eine Rolle (15a, 15b) nicht mehr mit der Oberfläche in Kontakt ist, sie die Geradeausposition einnimmt.

5. Fahrzeug (1) nach einem der vorhergehenden Ansprüche, wobei die Drehachse jedes Stabilisierungsrads (9, 10) vor der Drehachse des gelenkten Rads (6) angeordnet ist.

6. Fahrzeug (1) nach einem der vorhergehenden Ansprüche, wobei der Durchmesser jedes Stabilisierungsrades (9, 10) weniger als zwei Drittel des Durchmessers des gelenkten Rades (6) beträgt.

7. Fahrzeug (1) nach einem der vorhergehenden Ansprüche, wobei der Aufhängungsanschlag (24) eine Einstellvorrichtung umfasst, um den Abstand einzustellen.

8. Fahrzeug (1) nach einem der vorhergehenden Ansprüche, wobei das Vorspannmittel für das gelenkte Rad (6) eine Feder (22) umfasst, die auch den Aufhängungsanschlag bildet, wenn sie vollständig zusammengedrückt ist.

9. Fahrzeug (37) nach einem der Ansprüche 5 bis 7, wobei der Aufhängungsanschlag (43) elastisch ist und eine weitere Abwärtsbewegung des Rahmens (48) relativ zum gelenkten Rad (38) ermöglicht, um Stöße, die dadurch entstehen, dass das gelenkte Rad (38) auf ein Hindernis trifft, während der Rahmen (48) auf dem Anschlag (43) aufliegt, ganz oder teilweise zu absorbieren.

10. Fahrzeug (37) nach Anspruch 9, wobei die Steifigkeit des Aufhängungsanschlags (43) größer ist als die Steifigkeit des Vorspannmittels (44) und der Aufhängungsanschlag (43) um einen Betrag komprimierbar ist, der nicht ausreicht, damit der genannte weitere Abwärtsweg die genannte Höhe über der Oberfläche überschreitet.

11. Fahrzeug (37) nach einem der Ansprüche 9 oder 10, wobei der Aufhängungsanschlag (43) einen Block aus komprimierbarem Material umfasst und wobei das Vorspannmittel (44) für das gelenkte Rad (38) eine Druckfeder (44) umfasst, die zwischen dem Rahmen (48) und dem gelenkten Rad (38) wirkt, wobei die Druckfeder (44) eine Längsachse aufweist und an einem Ende direkt oder indirekt über einen elastischen Materialblock (43) mit entweder dem Rahmen (48) oder dem gelenkten Rad (38) verbunden ist, wobei der Materialblock (43) in axialer Richtung eine größere Steifigkeit aufweist als die Druckfeder (44), wenn sich die Druckfeder (44) in einem anderen Zustand als einem vollständig zusammengedrückten Zustand befindet, wobei der Aufhängungsanschlag durch den elastischen Block (43) und die Druckfeder (44) gebildet wird, wenn sich die Druckfeder (44) in einem vollständig zusammengedrückten Zustand befindet.

12. Fahrzeug (37) nach Anspruch 11, das ferner einen Fahrhöheneinsteller (45, 46, 47) umfasst, um die maximale Höhe der Stabilisierungsräder (49) über der ebenen Oberfläche durch Begrenzen der maximalen Ausdehnung des komprimierbaren Materials (43) zu steuern.

13. Fahrzeug (1) nach einem der vorhergehenden Ansprüche, das ein Mobilitätsroller ist.

## Revendications

1. Véhicule (1) comprenant :
un châssis (2) ;
deux roues (3, 4) montées au niveau ou à proximité d'une extrémité arrière du châssis ;
une roue directrice (6) montée au centre au niveau ou à proximité d'une extrémité avant du châssis ;
deux roues stabilisatrices (9, 10) montées au niveau ou à proximité de l'extrémité avant du châssis, respectivement de chaque côté de la roue directrice (6) ; et
un mécanisme de suspension (19) entre le châssis (2) et la roue directrice (6) pour permettre un déplacement vertical de la roue directrice (6) par rapport au châssis (2), le mécanisme de suspension (19) comprenant un moyen de sollicitation (22) pour la roue directrice (6), le moyen de sollicitation (22) agissant directement ou indirectement entre le châssis (2) et la roue directrice (6) pour pousser la roue directrice vers le bas par rapport au châssis (2), le moyen de sollicitation (19) étant conçu et choisi de telle sorte que, lors d'une utilisation, lorsque le véhicule (1) se trouve sur une surface inégale, lorsque les roues stabilisatrices (9, 10) entrent en contact avec le sol de sorte que le châssis (2) soit soutenu au moins en partie par les roues stabilisatrices (9, 10), le moyen de sollicitation (22) pousse la roue directrice (6) vers le bas en contact avec la surface afin d'agir de manière à maintenir la roue directrice (6) en contact avec la surface, afin de conserver une capacité de direction lorsque le véhicule (1) vient à être en partie soutenu par les roues stabilisatrices (9, 10),
le véhicule (1) étant **caractérisé en ce que** le mécanisme de suspension (19) comprend en outre une butée de suspension (25) conçue pour limiter un déplacement vers le haut de la roue directrice (6) contre le moyen de sollicitation (22) par rapport au châssis (2), le moyen de sollicitation (22) étant conçu pour être réglé en fonction du poids d'un conducteur donné afin de commander la force vers le bas appliquée par le moyen de sollicitation (22) sur la roue directrice (6) de telle sorte que, lors d'une utilisation normale, lorsque le véhicule (1) se trouve sur une surface plane, le poids du véhicule et le poids d'un conducteur poussent le châssis (2) vers le bas par rapport à la roue directrice (6), contre le moyen de sollicitation (22), jusqu'à ce que la butée de suspension (24) limite un déplacement supplémentaire vers le bas du châssis (2) par rapport à la roue directrice (6), l'avant du châssis (2) étant alors soutenu par la roue directrice (6) et la butée de suspension (24), la butée de suspension (24) maintenant l'avant du châssis (2) à une hauteur au-dessus de la surface telle qu'il y ait une hauteur libre entre les roues stabilisatrices (9, 10) et la surface plane.

2. Véhicule (1) selon la revendication 1, comprenant en outre un mécanisme de direction (7, 8) qui est relié à la roue directrice (6) mais qui n'est pas relié aux roues stabilisatrices (9, 10), de telle sorte que la direction des roues stabilisatrices (9, 10) soit commandée uniquement par leur contact avec la surface.

3. Véhicule (1) selon la revendication 1 ou 2, les roues stabilisatrices (9, 10) étant les roues de roulettes (15a, 15b) respectives, chaque roulette (15a, 15b) étant montée sur le châssis (2) de manière à pouvoir tourner généralement librement autour d'un axe sensiblement vertical, le véhicule (1) comprenant en outre une butée (32) associée à chaque roulette (15a, 15b) pour limiter la rotation de la roulette (15a, 15b) par rapport au châssis (2), de telle sorte que, à partir de la position de marche en ligne droite que chaque roulette (15a, 15b) prendrait si elle venait en contact avec la surface lorsque le véhicule (1) se déplace en ligne droite vers l'avant, chaque roulette (15a, 15b) soit empêchée de tourner vers l'extérieur à partir de la position de marche en ligne droite.

4. Véhicule (1) selon la revendication 3, chaque roulette (15a, 15b) étant associée à un moyen de sollicitation de roulette pour pousser cette roulette (15a, 15b) vers la position de marche en ligne droite, de telle sorte que lorsqu'une roulette (15a, 15b) n'est plus en contact avec la surface, elle prenne la position de marche en ligne droite.

5. Véhicule (1) selon l'une quelconque des revendications précédentes, l'axe de rotation de chaque roue stabilisatrice (9, 10) étant situé en avant de l'axe de rotation de la roue directrice (6).

6. Véhicule (1) selon l'une quelconque des revendications précédentes, le diamètre de chaque roue stabilisatrice (9, 10) étant inférieur à deux tiers du diamètre de la roue directrice (6).

7. Véhicule (1) selon l'une quelconque des revendications précédentes, la butée de suspension (24) comprenant un moyen de réglage permettant de régler la hauteur libre.

8. Véhicule (1) selon l'une quelconque des revendications précédentes, le moyen de sollicitation pour la roue directrice (6) comprenant un ressort (22) qui définit également la butée de suspension lorsqu'il est complètement compressé.

9. Véhicule (37) selon l'une quelconque des revendications 5 à 7, la butée de suspension (43) étant élastique et permettant un déplacement supplémentaire vers le bas du châssis (48) par rapport à la roue directrice (38) afin d'absorber, ou d'absorber partiellement, tout choc résultant de l'impact de la roue directrice (38) contre un obstacle alors que le châssis (48) est soutenu sur la butée (43).

10. Véhicule (37) selon la revendication 9, la rigidité de la butée de suspension (43) étant supérieure à la rigidité du moyen de sollicitation (44), et la butée de suspension (43) étant compressible d'une quantité insuffisante pour que ledit déplacement supplémentaire vers le bas dépasse ladite hauteur au-dessus de la surface.

11. Véhicule (37) selon l'une quelconque des revendications 9 ou 10, la butée de suspension (43) comprenant un bloc de matériau compressible et le moyen de sollicitation (44) pour la roue directrice (38) comprenant un ressort de compression (44) agissant entre le châssis (48) et la roue directrice (38), le ressort de compression (44) comportant un axe longitudinal et étant relié au niveau d'une extrémité, directement ou indirectement, par un bloc de matériau élastique (43) au châssis (48) ou à la roue directrice (38), le bloc de matériau (43) présentant une rigidité dans la direction axiale supérieure à celle du ressort de compression (44) lorsque le ressort de compression (44) est dans un état autre qu'un état complètement compressé, la butée de suspension étant formée par le bloc élastique (43) et le ressort de compression (44) lorsque le ressort de compression (44) est dans un état complètement compressé.

12. Véhicule (37) selon la revendication 11, comprenant en outre un dispositif de réglage de hauteur de caisse (45, 46, 47) pour commander la hauteur maximale des roues stabilisatrices (49) au-dessus de la surface plane en limitant l'expansion maximale du matériau compressible (43).

13. Véhicule (1) selon l'une quelconque des revendications précédentes, ledit véhicule étant un scooter pour personnes à mobilité réduite.
